(19) Europäisches Patentamt / European Patent Office / Office européen des brevets

(11) **EP 2 684 101 B1**

(12) **EUROPEAN PATENT SPECIFICATION**

(45) Date of publication and mention
of the grant of the patent:
**10.05.2017 Bulletin 2017/19**

(51) Int Cl.:
***G05D 23/19*** (2006.01)   ***F24F 11/00*** (2006.01)

(21) Application number: **12758378.9**

(86) International application number:
**PCT/SE2012/000028**

(22) Date of filing: **08.03.2012**

(87) International publication number:
**WO 2012/125099 (20.09.2012 Gazette 2012/38)**

(54) **METHOD AND INSTALLATION FOR REGULATING THE INDOOR TEMPERATURE IN A ROOM**

VERFAHREN UND INSTALLATION ZUR REGELUNG DER TEMPERATUR IN EINEM RAUM

PROCÉDÉ ET INSTALLATION POUR RÉGULER LA TEMPÉRATURE INTÉRIEURE DANS UNE PIÈCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2011 SE 1100173**

(43) Date of publication of application:
**15.01.2014 Bulletin 2014/03**

(73) Proprietor: **JIFAB Jan Forslund AB**
**181 35 Lidingö (SE)**

(72) Inventor: **FORSLUND, Jan**
**181 35 Lidingö (SE)**

(74) Representative: **Ehrner & Delmar Patentbyrå AB**
**Drottninggatan 33, plan 4**
**111 51 Stockholm (SE)**

(56) References cited:
| | |
|---|---|
| **EP-A1- 0 150 671** | **EP-A1- 1 956 460** |
| **EP-A1- 1 956 460** | **EP-A1- 2 103 884** |
| **WO-A1-2008/067919** | **WO-A1-2010/087759** |
| **GB-A- 2 176 275** | **US-A- 4 019 677** |
| **US-A1- 2004 083 029** | **US-A1- 2009 159 716** |
| **US-A1- 2011 049 252** | |

## Description

### Technical field of the invention

The present invention relates to a method for regulating the indoor temperature in a room. The invention relates also to an installation for regulating the indoor temperature in a room.

### State of the art

A method known from WO2008/067919 for controlling the speed of a circulation pump whereby throttling of the pump is varied in response to measured room temperature.

An arrangement for temperature control in heating systems which is known from US 4,667,875 is based on the temperature of the heat transfer medium, the indoor temperature, the difference between the indoor temperature and the desired indoor temperature, and on the outdoor temperature. There does not seem to be any control of the flow.

The parameters involved in a method known from DE3328189 for optimising the dependence of a temperature value of a heating installation with a heat source are indoor temperature, desired indoor temperature, outdoor temperature and the temperature of the heating system. There does not seem to be any control of the flow.

### Objects and features of the invention

A primary object of the present invention is to propose a method and an installation of the kind described in the introduction which take into account the building structure's heat storage capacity and heat emission capacity.

Another object of the present invention is to also take into account the direct heat losses.

A further object of the present invention is to regulate the flow in a circulation circuit for a thermal medium.

At least the primary object of the present invention is achieved by the features indicated in the independent claim. Preferred embodiments of the invention are defined in the dependent claims.

### Brief description of the drawings

A preferred embodiment of the invention is described below with reference to the attached drawings, in which:

Fig. 1    depicts schematically a climate installation for a room according to the present invention;
Fig. 2    depicts schematically the underlying idea of the present invention with respect to an undesired temperature increase;
Fig. 3    depicts schematically the underlying idea of the present invention with respect to an undesired temperature decrease;
Fig. 4    depicts comparative staple diagrams for cold weather conditions and warm weather conditions; and
Fig. 5    depicts schematically an alternative climate installation for a room according to the present invention.

### Detailed description of prior art and a preferred embodiment according to the present invention

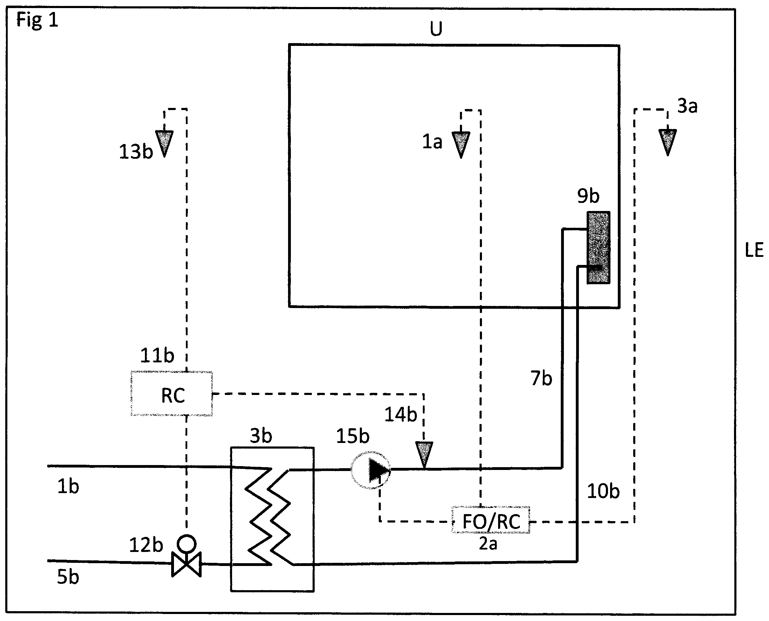

The climate installation depicted in Fig. 1 is a combination of prior art and of technology according to the concept of the present invention, and the room which is to be air-conditioned is designated U.

The climate installation depicted in Fig. 1 comprises a feed line 1b, a heat exchanger 3b and a return line 5b. The feed line 1b runs into the heat exchanger 3b and the return line 5b leads away from the heat exchanger 3b. The feed line 1b and the return line 5b are connected to one another within the heat exchanger 3b and their connection may take the form of a first transfer loop which may preferably be helical.

The feed line 1b starts from a central installation, e.g. a district heating plant, and the return line 5b ends at the central installation. The lines 1b and 5b convey an energy storage medium, e.g. water, and the temperature of the energy storage medium is determined by the central installation. The central installation thus delivers in the feed line an energy storage medium which is at a temperature normally determined by the central installation. The heat exchanger 3b is normally situated in a local unit LE, e.g. an apartment building, to which the central installation delivers energy via the energy storage medium.

A supply line 7b runs from the central installation to a radiator 9b from which a discharge line 10b runs back to the heat exchanger 3b. The supply line 7b and the discharge line 10b are connected together both within the heat exchanger 3b and within the radiator 9b to form a closed loop. Within the heat exchanger 3b, the supply line 7b and the discharge line 10b are connected together by a second transfer loop (not depicted) which may preferably be helical.

In the local unit LE there is a first regulating centre 11b by means of which the local unit's staff can take various forms of control action regarding the energy supply to the room U.

A motorised valve 12b is provided on the return line 5b to control the flow in the return line, thereby also affecting the flow in the feed line 1b, since the feed line 1b and the return line 5b are connected together. The control of the motorised valve 12b is conducted via the first regulating centre 11b. A first outdoor temperature sensor 13b is connected to the first regulating centre 11b. A supply temperature sensor 14b is provided on the supply line 7b, between the heat exchanger 3b and the room U, and is connected to the first regulating centre 11b.

A pump 15b is provided on the supply line 7b and its rotation speed can be varied in response to pressure changes in the supply line 7b. These pressure changes are effected by a thermostat (not depicted) which is situated close to the radiator 9b and which regulates the flow cross-section in the supply line 7b.

What is described above represents prior art. Generally, it may be said that this prior art is a relatively "blunt instrument" for controlling the climate of the room U. Reference notations pertaining to prior art end in "b" whereas those pertaining to the concept of the present invention end in "a".

According to the concept of the present invention, the climate installation according to Fig. 1 comprises an indoor temperature sensor 1a, a second outdoor temperature sensor 3a and a second regulating centre 2a which preferably comprises a frequency converter FO.

The indoor temperature sensor 1a and the second outdoor temperature sensor 3a are connected to the second regulating centre 2a. The pump 15b is likewise connected to the second regulating centre 2a and its speed can be controlled by means of the frequency converter FO which forms part of the second regulating centre 2a.

The present invention's background reasoning is as follows. How long a temperature change takes depends on a room's thermodynamic characteristics. A "heavy" structure results in longer time differences and consequently greater heat storage capacity than a "light" structure.

The heat losses depend on both indoor and outdoor temperature and on the room's transmission and ventilation loss factors. The room's heat requirements are also affected by its thermodynamic characteristics.

The idea of the present invention is to have both the slow dynamic thermal characteristics and the more direct heat losses regulated jointly so as to achieve a steady indoor temperature.

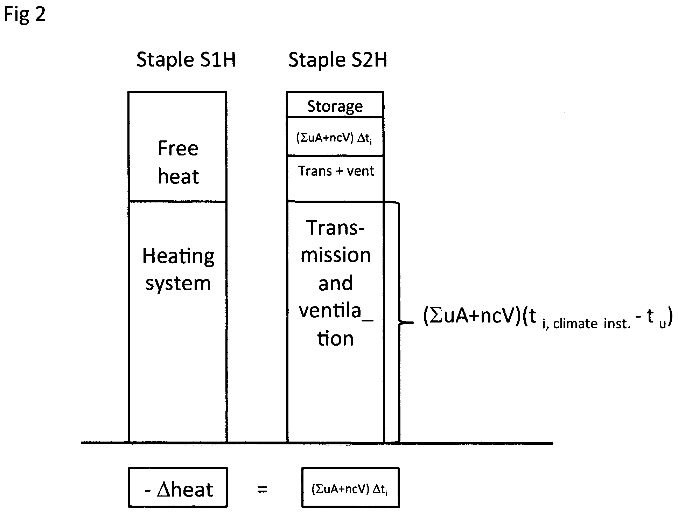

Fig. 2 depicts schematically a line of reasoning around heat balance, leading to a formula which indicates the flow change to be applied to the energy storage medium in the closed loop which comprises the supply line 7b and the discharge line 10b, this change being effected by means of the pump 15b. Fig. 2 depicts a case where there is an undesired rise in the room's temperature.

Fig. 2 depicts a first staple S1H and a second staple S2H. The first staple S1H symbolises the heat supplied to the room, a first portion of which is supplied via a heating system. In Fig. 1, the heating system takes the form of a radiator 9b. A second portion of the heat supplied takes the form of so-called free heat, which may for example come from solar radiation through the room's windows, from heat emitted by human beings who spend time in the room or from heat emitted by a switched-on computer or TV. These are merely a few possible examples.

In conjunction with the heat supplied by the heating system, a certain amount of the free heat results in a desired indoor temperature. The rest of the free heat results in a temperature surplus $\Delta t_i$.

The heat discharged from the room is symbolised by staple S2H, comprising not only ventilation losses, i.e. heat discharged via the ventilation system, but also transmission losses, i.e. heat flow through the room's climate shell, e.g. floor, walls, windows and ceiling, i.e. the surfaces which define the room. Part of the heat discharged may be expressed as $(\Sigma uA+ncV)\Delta t_i$ and represents the heat loss caused by a temperature rise $\Delta t_i$ due to an undesired surplus. Heat is also discharged from the room by being stored in the room's structure. According to the concept of the present invention it is assumed that the heat supplied by the heating system/the radiator 9b corresponds to the heat discharged by ventilation and transmission. This discharged heat may be expressed as $(\Sigma uA+ncV) (t_{i,climate\ inst.} -t_u)$, in which:

u is a mean value for the heat transmission coefficient of walls, windows, ceiling etc.

A is surrounding area (climate screen, ceiling, walls, windows, floor over crawl space etc.)

n is specific air flow (number of air changes per hour, taking a minimum requirement in residential premises of 0.5 changes per hour, so that all of the air is replaced after two hours)

C is the air's thermal capacity

V is the volume of the building or room

$t_{i,climate\ inst.}$ is equal to the outdoor temperature at the time of the year when the heat produced by the respective climate installation is for hot water only

$t_u$ denotes the actual outdoor temperature and may be measured by the outdoor temperature sensor 3a.

The procedure for arriving at $t_{i,climate\ inst.}$ for the respective climate installation may be as follows. By considering the heat which the climate installation produces at different times of the year it is possible to identify the time when this heat is at a constant low level. It is then possible to draw the conclusion that at that time of the year the installation produces heat for domestic hot water only and consequently that $t_{i,climate\ inst.}$ is equal to $t_u$, i.e. the outdoor temperature at the respective time of year. The outdoor temperature $t_u$ is arrived at from measurements of it, which at least in Sweden are regularly taken all the year round at a very large number of locations.

In this context it should be noted that both transmission and ventilation depend on the difference between the indoor temperature $t_{i,reg}$ measured in the room and the outdoor temperature. If the indoor temperature in the room rises with no change in the outdoor temperature, the ventilation will increase and so too will the transmission losses. This total increase may be expressed as $(\Sigma uA+ncV)\Delta t_i$, in which $\Delta t_i$ is an undesired temperature rise in the room.

Staple S2H comprises also a portion called **Storage,** representing the heat which is absorbed by, and stored as energy in, the structure surrounding the room. According to the concept of the present invention, **Free heat** represents the surplus heat which partly raises the indoor temperature from $t_{i,climate\ inst.}$ to $t_{i,reg}$ and is partly stored in the structure. A certain amount of the **Free heat** results in an undesired rise in the room's temperature. The undesired discharge of heat by transmission and ventilation may be expressed as $(\Sigma uA+ncV)\Delta t_i$.

Examining the rest of staples S1H and S2H produces the following heat relationship: **Heating system = $(\Sigma uA+ncV)(t_{i,climate\ inst.}-t_u)$.**

The heat supplied from the heating system may also be expressed as **q x k $(t_F-t_R)$,** in which:

> $q$ is the normal flow in the closed loop which comprises the supply line 7b and the discharge line 10b;
> $k$ is a constant which results in the heat according to the stated formula being expressed in watts;
> $t_F$ is the temperature of the energy storage medium in the supply line 7b; and
> $t_R$ is the temperature of the energy storage medium in the discharge line.

According to the above reasoning,

$$q \ x \ k \ (t_F - t_R) = (\Sigma uA+ncV) \ (t_{i,climate\ inst.} - t_u).$$

To counteract the temperature rise $\Delta t_i$, the flow in the circulation circuit has to be reduced by $\Delta q\ x\ k\ (t_F-t_R)$, which represents the heat decrease which the undesired temperature rise $\Delta t_i$ causes through increasing losses by transmission and ventilation, i.e. $(\Sigma uA+ncV)\Delta t_i$. According to this reasoning, $\Delta q\ x\ k\ (t_F-t_R) = (\Sigma uA+ncV)\Delta t_i$. The result after formation of the ratio $\Delta q/q$ and simplification is $\Delta q/q = \Delta t_i/(t_{i,climate\ inst.}-t_u)$. This relationship provides the following information. Upon a temperature rise $\Delta t_i$ registered by an indoor temperature sensor 1a, the required percentage change/decrease $\Delta q/q$ in the flow is calculated by the above formula $\Delta q/q = \Delta t_i/(t_{i,climate\ inst.}-t_u)$. In practice the change is effected by altering the speed of the pump 15b by means of the frequency converter FO in the second regulating centre 2a.

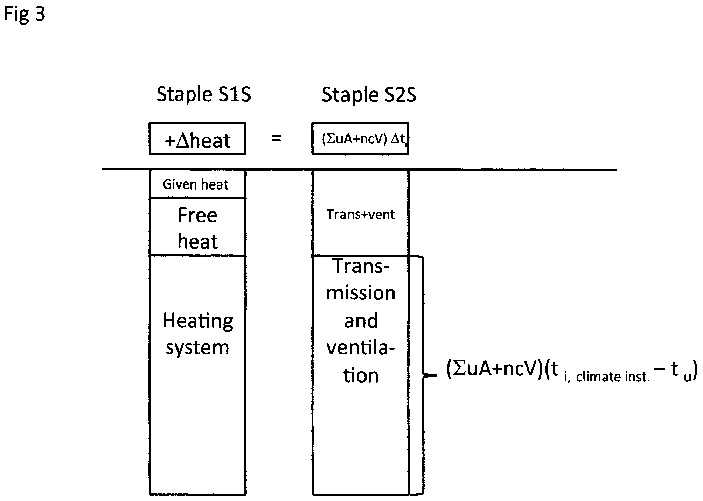

Fig. 3 likewise sets out schematic reasoning around heat balance, illustrating in this case an undesired temperature drop.

Fig. 3 depicts a first staple S1S and a second staple S2S. The first staple S1S symbolises the heat supplied to the room, a first portion of which is supplied via a heating system. In Fig. 1, the heating system takes the form of a radiator 9b. A second portion of the heat supplied takes the form of what is called **Free heat** in Fig. 3, which may for example come from solar radiation through the room's windows, from the heat emitted by human beings who spend time in the room or from the heat emitted by a switched-on computer or TV. These are merely a few examples. When there is a drop in the room's temperature, energy stored in the structure will be delivered to the room in the form of heat called **"Given heat"** in Fig. 3. The contributions from **Free heat** and **Given heat** cause a certain rise in the room's temperature, but not such a large rise that its desired temperature is reached. The difference between the temperature measured in the room and its desired temperature is called $\Delta t_i$ and is thus a temperature drop.

The heat discharged from the room is symbolised by staple S2S, comprising not only ventilation losses, i.e. heat drawn out via the ventilation system, but also transmission losses, i.e. heat flow through the room's climate shell, e.g. floor, walls, windows, ceiling, i.e. the surfaces which define the room. According to the concept of the present invention, it is assumed that the heat supplied from the heating system/the radiator 9b corresponds to the heat discharged by ventilation and transmission.

Staple S2S comprises also **losses by transmission and ventilation as a result of the rise in the room's temperature due to free heat and heat delivered to the room from the structure.** As indicated above, this rise in the room's temperature is not sufficient for the desired indoor temperature to be reached.

To counteract the undesired temperature drop $\Delta t_i$, the flow in the circulation circuit has to be increased by $\Delta q\ x\ k\ (t_F-t_R)$, which represents the heat decrease which the temperature drop $\Delta t_i$ causes as a result of decreased losses by transmission and ventilation and consequently lower indoor temperature, i.e. $(\Sigma uA+ncV)\Delta t_i$. According to this reasoning, $\Delta q\ x\ k\ (t_F-t_R) = (\Sigma uA+ncV)\Delta t_i$. The result after formation of the ratio $\Delta q/q$ and simplification is $\Delta q/q = \Delta t_i/(t_{i,climate\ inst.}-t_u)$. This relationship provides the following information. Upon a temperature drop $\Delta t_i$ registered by an

indoor temperature sensor 1a, the required percentage change/decrease $\Delta\mathbf{q}/\mathbf{q}$ in the flow is calculated by the above formula $\Delta\mathbf{q}/\mathbf{q} = \Delta\mathbf{t_i}/(\mathbf{t_{i,climate\ inst.}}-\mathbf{t_u})$. In practice the change is effected by altering the speed of the pump 15b by means of the frequency converter FO in the second regulating centre 2a. It is also conceivable to use instead of the frequency converter FO some other means with a similar function.

In this context it should be mentioned that the above formula does not work in the particular case of $\mathbf{t_{i,climate\ inst.}}=\mathbf{t_u}$, since the denominator in the formula will then be zero and the flow change $\Delta\mathbf{q}/\mathbf{q}$ be infinitely large.

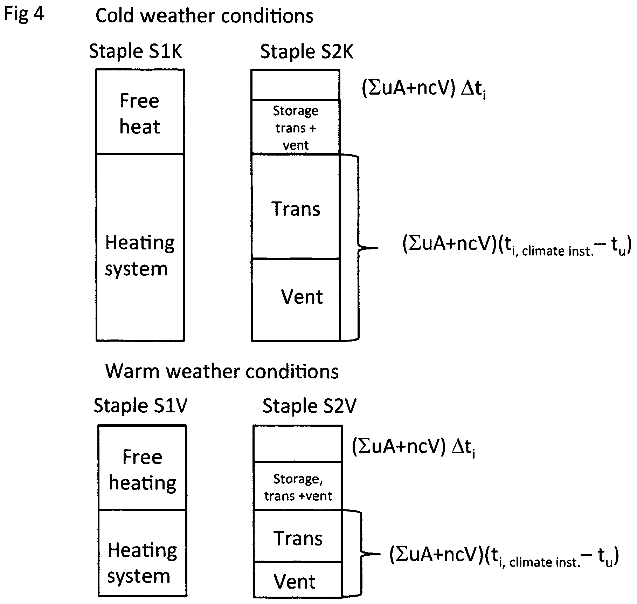

Examination of the formula $\Delta\mathbf{q}/\mathbf{q} = \Delta\mathbf{t_i}/(\mathbf{t_{i,climate\ inst.}}-\mathbf{tu})$ shows that a certain value of $\Delta\mathbf{t_i}$, e.g. 0.5°, results in a larger flow change $\Delta\mathbf{q}/\mathbf{q}$ when the difference between the outdoor temperature at the time of the year when the heat produced by the climate installation is for hot water only, $\mathbf{t_{i,climate\ inst.}}$, and the actual outdoor temperature $\mathbf{t}_u$ is small. This may seem remarkable, but is explained below in relation to Fig. 4.

In Fig. 4, the upper staple diagrams represent cold weather conditions, the lower staple diagrams warm weather conditions. The two upper diagrams are respectively called S1K and S2K, the two lower diagrams S1V and S2V.

Each of the diagrams S1K and S1V for heat supplied, i.e. the left diagrams in Fig. 4, has an upper portion which represents which is called "Free heat" and is assumed to be of the same magnitude in cold as in warm weather conditions.

Comparing the left diagrams S1K and S1V in Fig. 4 shows that less heat is supplied from the heating system in warm than in cold weather.

The upper diagrams in Fig. 4, i.e. S2K and S2V, represent heat losses/heat discharged in cold and warm weather respectively. In both of them the heat losses by transmission and ventilation arising from the extra free energy are expressed as $(\Sigma\mathbf{uA+ncV})\Delta\mathbf{t_i}$. These losses are supposed to be the same in cold and warm weather. Comparing S2K and S2V indicates that the losses by transmission and ventilation expressed as $(\mathbf{EuA+ncV})(\mathbf{t_{i,climate\ inst.}}-\mathbf{t_u})$ are generally less in warm than in cold weather. The transmission and ventilation losses $(\Sigma\mathbf{uA+ncV})\Delta\mathbf{t_i}$ arising from the extra free energy thus represent a higher proportion of the heat losses in warm than in cold weather. Warm weather therefore requires a larger flow change $\Delta\mathbf{q}/\mathbf{q}$ in the flow of the energy storage medium to compensate for the heat losses due to the extra free energy. This explains why $\Delta\mathbf{q}/\mathbf{q}$ assumes a higher value when $\mathbf{t_{i,climate\ inst.}}$ and the actual outdoor temperature $\mathbf{t_u}$ are close to one another.

**Conceivable modifications of the invention**

The embodiment described above of a climate installation according to the present invention comprises a loop in the form of a radiator 9b which connects the supply line 7b to the discharge line 10b, but it is possible within the scope of the present invention that the loop might be configured in various different ways. A non-limitative example which may be mentioned is that the loop may take the form of floor heating whereby the loop is laid in the floor of the room.

The embodiment described above defines a circulation flow change to compensate for so-called unnecessary temperature surplus or deficit. It is there supposed that the feed line temperature and return line temperature are constant during a given period of change.

Within the scope of the present invention it is conceivable to define the change as thermal power change in which circulation flow, feed line temperature and return line temperature are all involved. See formula

$$\Delta\text{heat} = \Delta\text{q} \times \text{k} \times (\text{t}_F - \text{t}_R).$$

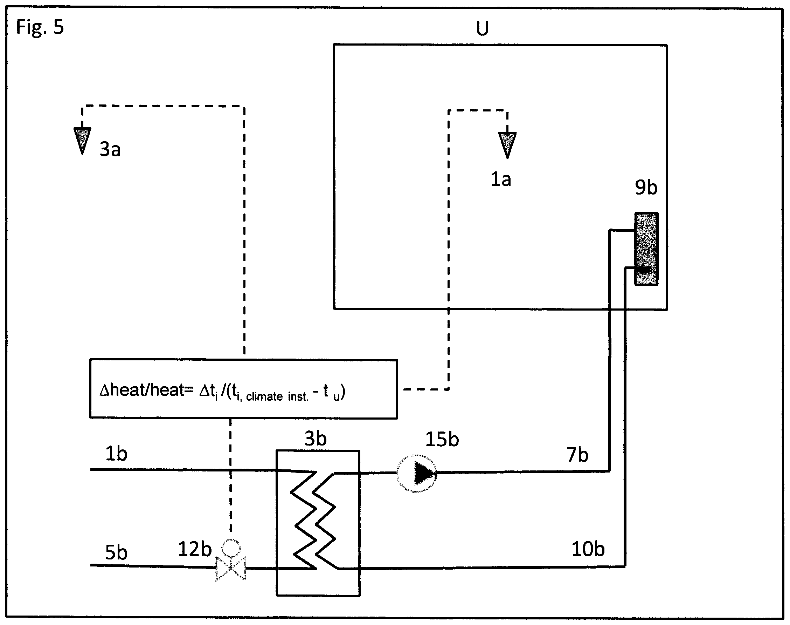

This alternative is illustrated in Fig. 5, which depicts schematically a climate installation which differs from that in Fig. 1 in that the regulating centre 11b and relating components are omitted.

The principle of the alternative depicted is controlling the motorised valve 12b, i.e. regulating the flow change in the feed line 1b and the return line 5b by means of the motorised valve 12b. This makes it possible to control the thermal power, i.e. the heating. Similar to the previous reasoning about circulation flow change, the heat change may therefore be expressed as $\Delta\mathbf{heat/heat} = \Delta\mathbf{t_i} / (\mathbf{t_{i,\ climate\ inst.}} - \mathbf{t_u})$, in which **"heat"** is the heating energy from an external heat source. In Fig. 5, **"heat"** is the thermal energy supplied in the feed line 1b from a central installation, e.g. a district heating plant.

**Claims**

**1.** A method for regulating the measured indoor temperature ($t_{i,reg.}$) in a room, such that a climate installation for the room comprises a supply line and an discharge line and a loop which connects these lines and is situated in the room, an energy storage medium flowing in the lines and the loop supplies heat to the room, the energy storage medium is subjected to a flow (q) in the lines and the loop, the outdoor temperature ($t_u$) is registered by an outdoor temperature sensor (3a/3b), the indoor temperature ($t_{i,reg.}$) in the room is registered by means of an indoor temperature sensor (1a) situated in the room, a temperature difference ($\Delta t_i$) is registered by comparing the measured indoor temperature ($t_{i,reg.}$) with a predetermined desired/chosen indoor temperature ($t_i$), and comparison between the temperatures takes place continuously at predetermined intervals of time, **characterized in that** the temperature difference ($\Delta t_i$) registered, together with a predetermined temperature ($t_{i,climate\ inst.}$), which is relevant to the climate installation, and the measured outdoor temperature ($t_u$), serve as parameters for regulating the measured indoor temperature ($t_{i,reg.}$), and that the regulation of the measured indoor temperature ($t_{i,reg.}$) is effected by change ($\Delta$**q**) in the flow **(q)** in the lines (7b, 10b) and the loop (9b) according to the formula $\Delta$**q/q** $= \Delta t_i/(t_{i,climate\ inst.}$ **-$t_u$)** or by change ($\Delta$**heat**) in the thermal power (heat) supplied from a central installation according to the formula $\Delta$**heat/heat** $= \Delta t_i / (t_{i,climate\ inst.}$ **-$t_u$).**

2. A method according to claim 1, **characterized in that** the energy storage medium is subjected to a flow by means of a pump (15b).

3. A method according to claim 1 or 2, **characterized in that** the regulation of the measured indoor temperature ($t_{i,reg.}$) takes place at the same intervals of time as the comparison of the measured indoor temperature ($t_{i,reg.}$) with a predetermined desired/chosen indoor temperature ($t_i$).

4. A climate installation for regulating the measured indoor temperature ($t_{i,reg.}$) in a room, such that the climate installation for the room comprises a supply line (7b) and a discharge line (10b) and a loop (9b) which connects these lines and is situated in the room, the lines (7b, 10b) and the loop (9b) accommodate an energy storage medium which supplies heat to the room, means (15b) for subjecting the energy storage medium to a flow (q) in the lines (7b, 10b) and the loop (9b), and an outdoor temperature sensor (3a/3b) for registering the outdoor temperature ($t_u$), **characterized by** an indoor temperature sensor (1a) situated in the room to register the indoor temperature ($t_{i,reg.}$) in the room, and in that the installation comprises means (FO; 12b) for changing ($\Delta$**q**) the flow **(q)** in the lines (7b, 10b) and the loop (9b) or for changing ($\Delta$**heat**) the thermal power **(heat)** in lines (1b, 5b) of a central installation, and that the change ($\Delta$**q**) in the flow **(q)** is according to the formula $\Delta$**q/q** $= \Delta t_i/(t_{i,climate\ inst.}$ **-$t_u$)**, where $\Delta t_i$ is a difference between the temperature **($t_{i,reg.}$)** registered in the room and its desired temperature and **($t_{i,climate\ inst.}$)** a predetermined temperature, which is relevant to the climate installation, or that the change ($\Delta$**heat**) in the thermal power **(heat)** supplied from the central installation is according to the formula $\Delta$**heat/heat** $= \Delta t_i / (t_{i,climate\ inst.}$ **-$t_u$).**

5. A climate installation according to claim 4, **characterized in that** a pump (15b) is provided to subject the energy storage medium to a flow (q) in the lines (7b, 10b) and the loop (9b).

6. A climate installation according to claim 5, **characterized in that** a frequency converter (FO) is associated with the pump (15b).

**Patentansprüche**

1. Verfahren zum Regeln der gemessenen Innentemperatur ($t_{i,\ reg.}$) in einem Raum, sodass eine Klimaanlageninstallation für den Raum eine Versorgungsleitung und eine Entsorgungsleitung und eine Schleife umfasst, welche diese Leitungen verbindet, und in dem Raum angebracht ist, wobei ein Energiespeichermedium, das in den Leitungen und der Schleife fließt, den Raum mit Wärme versorgt, wobei das Energiespeichermedium in den Leitungen und der Schleife einer Strömung (q) unterliegt, wobei die Außentemperatur ($t_u$) durch einen Außentemperatursensor (3a / 3b) registriert wird, wobei die Innentemperatur ($t_{i,\ reg.}$) in dem Raum mittels eines Innentemperatursensors (1a) registriert wird, der in dem Raum angebracht ist, wobei eine Temperaturdifferenz ($\Delta t_i$) registriert wird, indem die gemessene Innentemperatur ($t_{i,\ reg.}$) mit einer gewünschten/ausgewählten Innentemperatur ($t_i$) verglichen wird, und wobei der Vergleich zwischen den Temperaturen kontinuierlich in vorbestimmten Zeitintervallen stattfindet, **dadurch gekennzeichnet, dass** die registrierte Temperaturdifferenz ($\Delta t_i$) zusammen mit einer vorbestimmten Temperatur ($t_{i,\ climate\ inst.}$), die für die Klimaanlageninstallation wichtig ist, und der gemessenen Außentemperatur ($t_u$) als Parameter für das Regeln der gemessenen Innentemperatur ($t_{i,\ reg.}$) dient und dass das Regeln der gemessenen Innentemperatur ($t_{i,\ reg.}$) durch eine Änderung ($\Delta$q) der Strömung (q) in den Leitungen (7b, 10b) und der Schleife (9b) gemäß der Formel $\Delta$q / q $= \Delta t_i / (t_{i,\ climate\ inst.} - t_u$) oder durch eine Änderung ($\Delta$heat) der der thermischen Leistung (heat) ausgeführt wird, die von einer zentralen Installation gemäß der Formel $\Delta$heat / heat $= \Delta t_i / (t_{i,\ climate\ inst.} - t_u$) zugeführt wird.

2. Verfahren nach Anspruch 1, **dadurch gekennzeichnet, dass** das Energiespeichermedium mithilfe einer Pumpe (15b) einer Strömung unterzogen wird.

3. Verfahren nach Anspruch 1 oder 2, **dadurch gekennzeichnet, dass** das Regeln der gemessenen Innentemperatur ($t_{i,\,reg}$) in den gleichen Zeitintervallen wie der Vergleich der gemessenen Innentemperatur ($t_{i,\,reg}$) mit einer gewünschten/ausgewählten Innentemperatur ($t_i$) stattfindet.

4. Klimaanlageninstallation zum Regeln der gemessenen Innentemperatur ($t_{i,\,reg}$) in einem Raum, sodass die Klimaanlageninstallation für den Raum eine Versorgungsleitung (7b) und eine Entsorgungsleitung (10b) und eine Schleife (9b), welche diese Leitungen verbindet und in dem Raum angebracht ist, wobei die Leitungen (7b, 10b) und die Schleife (9b) ein Energiespeichermedium beherbergen, das den Raum mit Wärme versorgt; ein Element (15b), welches das Energiespeichermedium in den Leitungen (7b, 10b) und der Schleife (9b) einer Strömung (q) unterzieht; und einen Außentemperatursensor (3a / 3b) zum Registrieren der Außentemperatur ($t_u$) umfasst, **dadurch gekennzeichnet, dass** ein Innentemperatursensor (1a) in dem Raum angebracht ist, um die Innentemperatur ($t_{i,\,reg}$) in dem Raum zu registrieren, und dass die Installation ein Element (FO; 12b) zum Ändern ($\Delta q$) der Strömung (q) in den Leitungen (7b, 10b) und der Schleife (9b) oder zum Ändern ($\Delta heat$) der thermischen Leistung (heat) in den Leitungen (1b, 5b) einer zentralen Installation umfasst und dass das Ändern ($\Delta q$) der Strömung (q) gemäß der Formel $\Delta q / q = \Delta t_i / (t_{i,\,climate\,inst.} - t_u)$ erfolgt, wobei $\Delta t_i$ eine Differenz zwischen der in dem Raum registrierten Temperatur ($t_{i,\,reg}$) und seiner gewünschten Temperatur ist und ($t_{i,\,climate\,inst.}$) eine vorbestimmte Temperatur ist, die für die Klimaanlageninstallation wichtig ist, oder dass das Ändern ($\Delta heat$) der thermischen Leistung (heat), die von der zentralen Installation zugeführt wird, gemäß der Formel $\Delta heat / heat = \Delta t_i / (t_{i,\,climate\,inst.} - t_u)$ erfolgt.

5. Klimaanlageninstallation nach Anspruch 4, **dadurch gekennzeichnet, dass** eine Pumpe (15b) bereitgestellt wird, um das Energiespeichermedium in den Leitungen (7b, 10b) und der Schleife (9b) einer Strömung (q) zu unterziehen.

6. Klimaanlageninstallation nach Anspruch 5, **dadurch gekennzeichnet, dass** der Pumpe (15b) ein Frequenzwandler (FO) zugeordnet ist.

## Revendications

1. Procédé pour réguler la température intérieure mesurée ($t_{i,reg}$) dans une pièce, de telle sorte qu'une installation de climatisation pour la pièce comprenne une ligne d'alimentation et une ligne de déchargement et une boucle qui connecte ces lignes et qui est située dans la pièce, un fluide de stockage d'énergie s'écoule dans les lignes et la boucle fournit de la chaleur à la pièce, le fluide de stockage d'énergie est soumis à un écoulement (q) dans les lignes et la boucle, la température extérieure ($t_u$) est enregistrée par un capteur de température extérieure (3a/b), la température intérieure ($t_{i,reg}$) dans la pièce est enregistrée au moyen d'un capteur de température intérieure (1a) qui est situé dans la pièce, une différence de température ($\Delta t_i$) est enregistrée en comparant la température intérieure mesurée ($t_{i,reg}$) avec une température intérieure souhaitée/choisie prédéterminée ($t_i$), et une comparaison entre les températures est effectuée de façon continue à des intervalles de temps prédéterminés, **caractérisé en ce que** la différence de température ($\Delta t_i$) enregistrée, de concert avec une température prédéterminée ($t_{i,inst.\,clim.}$), qui est pertinente pour l'installation de climatisation, et la température extérieure mesurée ($t_u$), servent de paramètres pour réguler la température intérieure mesurée ($t_{i,reg}$), et **en ce que** la régulation de la température intérieure mesurée ($t_{i,reg}$) est effectuée par une variation ($\Delta q$) de l'écoulement (q) dans les lignes (7b, 10b) et la boucle (9b) suivant la formule $\Delta q/q = \Delta t_i/(t_{i,inst.\,clim.} - t_u)$ ou par une variation ($\Delta chaleur$) de la puissance thermique (chaleur) fournie à partir d'une installation centrale suivant la formule $\Delta chaleur/chaleur = \Delta t_i/(t_{i,inst.\,clim.} - t_u)$.

2. Procédé selon la revendication 1, **caractérisé en ce que** le fluide de stockage d'énergie est soumis à un écoulement au moyen d'une pompe (15b).

3. Procédé selon la revendication 1 ou 2, **caractérisé en ce que** la régulation de la température intérieure mesurée ($t_{i,reg}$) est effectuée aux mêmes intervalles de temps que la comparaison de la température intérieure mesurée ($t_{i,reg}$) avec une température intérieure souhaitée/choisie prédéterminée ($t_i$).

4. Installation de climatisation pour réguler la température intérieure mesurée ($t_{i,reg}$) dans une pièce, de telle sorte que l'installation de climatisation pour la pièce comprenne une ligne d'alimentation (7b) et une ligne de déchargement (10b) et une boucle (9b) qui connecte ces lignes et qui est située dans la pièce, les lignes (7b, 10b) et la boucle (9b) contenant un fluide de stockage d'énergie qui fournit de la chaleur à la pièce, des moyens (15b) pour soumettre le fluide de stockage d'énergie à un écoulement (q) dans les lignes (7b, 10b) et la boucle (9b), et un capteur de température extérieure (3a/3b) pour enregistrer la température extérieure ($t_u$), **caractérisée par** un capteur de température intérieure (1a) qui est situé dans la pièce pour enregistrer la température intérieure ($t_{i,reg}$) dans la pièce, et en ce que l'installation comprend des moyens (FO; 12b) pour effectuer une variation ($\Delta q$) de l'écoulement (q) dans les lignes (7b, 10b) et la boucle (9b) ou pour effectuer une variation ($\Delta$chaleur) de la puissance thermique (chaleur) dans les lignes (1b, 5b) d'une installation centrale, et en ce que la variation ($\Delta q$) de l'écoulement (q) est effectuée suivant la formule $\Delta q/q = \Delta t_i/(t_{i,inst.\ clim.} - t_u)$, où $\Delta t_i$ est une différence entre la température ($t_{i,reg}$) enregistrée dans la pièce et sa température souhaitée prédéterminée ($t_{i,inst.\ clim.}$), qui est pertinente pour l'installation de climatisation, ou en ce que la variation ($\Delta$chaleur) de la puissance thermique (chaleur) fournie à partir de l'installation centrale est effectuée suivant la formule $\Delta$chaleur/chaleur $= \Delta t_i/(t_{i,inst.\ clim.} - t_u)$.

5. Installation de climatisation selon la revendication 4, **caractérisée en ce qu'**une pompe (15b) est prévue pour soumettre le fluide de stockage d'énergie à un écoulement (q) dans les lignes (7b, 10b) et la boucle (9b).

6. Installation de climatisation selon la revendication 5, **caractérisée en ce qu'**un convertisseur de fréquence (FO) est associé à la pompe (15b).

Fig 1

Fig 2

Staple S1H     Staple S2H

**Staple S1H:**
- Free heat
- Heating system

**Staple S2H:**
- Storage
- $(\Sigma uA + ncV)\, \Delta t_i$
- Trans + vent
- Transmission and ventila_tion

$$(\Sigma uA + ncV)(t_{i,\text{ climate inst.}} - t_u)$$

$$-\Delta \text{heat} \quad = \quad (\Sigma uA + ncV)\, \Delta t_i$$

Fig 3

EP 2 684 101 B1

Staple S1S      Staple S2S

$+\Delta heat$    =    $(\Sigma uA + ncV)\,\Delta t_i$

Given heat

Free heat      Trans+vent

Heating system      Transmission and ventilation    $(\Sigma uA + ncV)(t_{i,\,climate\;inst.} - t_u)$

**Fig 4**      Cold weather conditions

Staple S1K        Staple S2K

$(\Sigma uA + ncV)\,\Delta t_i$

Free heat

Storage trans + vent

Trans

$(\Sigma uA + ncV)(t_{i,\,climate\ inst.} - t_u)$

Heating system

Vent

Warm weather conditions

Staple S1V        Staple S2V

$(\Sigma uA + ncV)\,\Delta t_i$

Free heating

Storage, trans +vent

Trans

$(\Sigma uA + ncV)(t_{i,\,climate\ inst.} - t_u)$

Heating system

Vent

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008067919 A
- US 4667875 A

- DE 3328189